# EUROPÄISCHE PATENTSCHRIFT

(11) **EP 3 752 754 B1**
(45) Veröffentlichungstag und Bekanntmachung des Hinweises auf die Patenterteilung: **06.04.2022**
(21) Anmeldenummer: 19706427.2
(22) Anmeldetag: 13.02.2019
(51) Int. Cl.: F16H 25/24, F16D 65/00, F16H 25/22

(54) **SELBSTAUFRICHTENDES GEWINDESPINDELMODUL FÜR EINE KRAFTFAHRZEUGBREMSE**
SELF-ERECTING THREADED SPINDLE MODULE FOR A MOTOR VEHICLE BRAKE
MODULE DE BROCHE FILETÉE AUTO-REDRESSEUR POUR UN FREIN DE VÉHICULE À MOTEUR

(30) Priorität: 16.02.2018 DE 102018202380; 13.07.2018 DE 102018211716
(43) Veröffentlichungstag der Anmeldung: 23.12.2020
(73) Patentinhaber: Continental Teves AG & Co. OHG, 60488 Frankfurt am Main (DE)
(72) Erfinder: WINKLER, Thomas, 60488 Frankfurt am Main (DE); MILISIC, Lazar, 60488 Frankfurt am Main (DE); HESS, Thomas, 60488 Frankfurt am Main (DE); ZACH, Mario, 9435 Heerbrugg (CH)
(74) Vertreter: Continental Corporation
(86) Internationale Anmeldenummer: PCT/EP2019/053491
(87) Internationale Veröffentlichungsnummer: WO 2019/158553

(56) Entgegenhaltungen:
- WO-A1-2008/037738
- DE-A1-102013 217 237
- DE-A1-102014 223 021
- DE-A1-102015 208 165

## Beschreibung

Die Erfindung betrifft ein Gewindespindelmodul umfassend eine Gewindespindel mit einer Längsachse A die an einem abtriebsseitigen Ende über ein Außengewinde und an einem antriebsseitigen Ende mit axialem Abstand zum Außengewinde über einen Zapfen zur drehfesten Kupplung mit einer Aktuatorschnittstelle verfügt, sowie mit einer Gewindemutter, die auf das Außengewinde aufgeschraubt ist, und wobei eine gelenkartig gekrümmte Auflage der Gewindemutter als Auflager des Gewindespindelmoduls in einer Aufnahme wie beispielsweise einem Transportdisplay, Lagertray oder Bremskolben dient. Die Erfindung erstreckt sich des Weiteren auf ein neuartiges Bremsmontageverfahren das auf einem vereinfachten Zusammenbau eines Bremssattelgehäuse, mit einem Bremsaktuator und mit Hilfe eines selbstausrichtenden Gewindespindelmoduls beruht.

Das beschriebene Gewindespindelmodul darf als essentieller Getriebebestandteil eines Radbremsaktuators verstanden werden, wobei das Gewindespindelmodul prinzipiell koaxial sowie fluchtend ausgerichtet in eine Aufnahmekavität mit Aufnahmeschnittstelle eines Bremssattelgehäuse, Transporttray oder ähnlichem lotrecht eingefügt wird, bevor die Antriebsschnittstelle des eingefügten Gewindespindelmoduls mit einer Aufnahme im Aktuator drehfest gekoppelt wird, und der Aktuator schließlich zum Verschluss der Kavität an das Bremssattelgehäuse angeflanscht wird. Dabei liegt die wichtige Hauptaufgabe des Gewindespindelmoduls in der Aktuatorkonfiguration darin, eine rotatorische Antriebsdrehbewegung des Aktuators in eine translatorische Zustellbewegung eines Stellelementes, wie insbesondere eines Bremskolbens, umzuwandeln.

Besonders mit Zielrichtung auf massenhaft-rationellen Zusammenbau der beschriebenen Komponenten in einer Großserienfertigung hat sich die zwangsläufige Blindmontage (unter visuell völlig verdeckter, konzentrischer sowie winkel- und lagerichtig arrangierter, formschlüssiger Kupplung zwischen Antriebsschnittstelle und Aktuatorausgangswelleschnittstelle bzw. Aktuatorgegenstück - ohne visuelle Lageerkennungsmöglichkeit) als besonders anspruchsvolle Aufgabe erwiesen. Denn die notwendige Ausrichtungspräzision wie auch die notwendigerweise störungsfreie, insbesondere erschütterungsfreie, Zuführung zwischen den zu kuppelnden Bauteilen in deren Paarung und Fertigstellung der Blindmontage ist im Rahmen einer mechanischen Großserienfertigung nur mit allerhöchstem Aufwand sicherzustellen. Die gestellten Präzisionserfordernisse erschweren eine fehlerfreie, und dennoch kostengerechte, industrielle Wertschöpfung. Zudem sind die bekannten Gewindespindelmodule so ausgelegt, dass sich diese als Antwort auf eine verhältnismäßig geringfügige Anregung bzw. Fehlstellung maximal querstellen, also eine fehlerbehaftete Endlage anstreben. Es ist daher eine Aufgabe der vorliegenden Erfindung, für eine möglichst einfache Verbesserung dieser nachteiligen Ausgangskonfiguration zu sorgen, so dass in dem beschriebenen Zusammenhang eine rationelle Kupplung zwischen Gewindespindelmodul und Aktuator ermöglicht ist.

Die beschriebene Aufgabe wird erfindungsgemäß erstmals mit einem selbstausrichtenden Gewindespindelmodul gelöst, indem das Gewindespindelmodul als konvexer dreidimensionaler Körper mit homogener, gleichmäßiger Dichteverteilung derart gestaltet vorgesehen ist, dass das Gewindespindelmodul mit Schwerkraftantrieb, beziehungsweise als regelungstechnische Antwort auf eine Störgröße, respektive einen Eingriff beziehungsweise Auslenkung, jeweils automatisch-selbsttätig eine monostabile Gleichgewichtslage aufweist, und wobei die monostabile Gleichgewichtslage dadurch gekennzeichnet ist, dass das antriebsseitige Ende des Gewindespindelmoduls vertikal oben und das abtriebsseitige Ende des Gewindespindelmoduls vertikal unten, lotrecht übereinander gerichtet, sowie orthogonal zur Horizontalen platziert vorgesehen sind. Demzufolge inkorporiert das erfindungsgemäße Gewindespindelmodul erstmals die vorteilhaften, selbstaufrichtenden physikalischen Eigenschaften wie eine kenterresistente Segelyacht, nur eben mit dem Vorteil, dass auf gesonderten kielartigen Ballast verzichtet werden kann. Dabei ist es das besondere Verdienst der vorliegenden Erfindung, die mathematischen Erkenntnisse des sogenannten *Göm*boc-Phänomens erstmals nutzbringend auf die Anforderungen der Kraftfahrzeugradbremstechnologie angewendet zu haben.

In der Erfindung ist zur Verstärkung der Rückstellwirkung vorgesehen, dass das Gewindespindelmodul in Relation zu seinem Gelenk , in Richtung Schwerkraftrichtung, also vertieft abgesenktem Schwerpunkt (das heisst möglichst geringer Höhe h3) derart ausgestattet ist, dass die Rückstellkräfte auf das Gewindespindelmodul maximiert sind. Also erfolgt eine beschleunigte,eigenstabile, automatisch selbsttätige, zentrierte sowie fluchtend zur Aktuatorschnittstelle gerichtete Rückstellung in Relation zur Aufnahmeschnittstelle. Also ist eine optimierte, selbsttätige, stabile Justiereigenschaft verfügbar, so dass sich das Gewindespindelmodul optimal g automatisch selbsttätig koaxial zentriert und fluchtend einstellt. Also ist die Schwerpunktlage des Gewindespindelmoduls in Relation zur Peripherie bzw. Aufnahme derart abgestimmt, dass sich das System wie ein sogenanntes "Stehaufmännchen" selbsttätig automatisch zentriert und mithin winkelgerecht selbstausrichtet. Die Erfindung ermöglicht erstmals einen wichtigen, konstruktiven Beitrag um Störungen eines Montagefertigungsprozesses/Montagebandstillstand mit Hilfe eines erfindungsgemäßen Gewindespindelmoduls wirkungsvoll zu verhindern.

Die Erfindung ermöglicht also eine vereinfachte, rationelle sowie automatisierte Bremsenherstellung und wobei durch die eigenstabile Konstruktion des Spindelmoduls zumindest teilweise auf bildverarbeitende Prozessleitsysteme bzw. Datenverarbeitungsanlagen verzichtet werden kann. Demzufolge ermöglicht die Erfindung nebenbei eine besonders intelligente Reduktion des notwendigen Investments, für den Fall, dass eine automatisierte oder werkergestützte Montagestrasse zur Herstellung besonders wettbewerbsfähiger Kraftfahrzeugbremskomponenten aufgebaut oder betrieben werden soll.

Die vorliegende Erfindung betrifft ein Gewindespindelgetriebe mit längs einer Längsachse arrangiertem Systemschwerpunkt, und umfassend eine Gewindemutter mit einer balligen Auflageschnittstelle, deren Balligkeit ein gedachtes Systemschwenkgelenk induziert, sowie umfassend eine eingeschraubte Gewindespindel nebst Antriebsschnittstelle an einem Schaftabschnittende, das diametral gegenüber zu einem Gewindespindelende an der Gewindespindel allokiert ist.

Die physikalisch-technische Abstimmung, also insbesondere Verhältnisse und Randbedingungen von Schwerpunkthöhe h2, Kontaktdurchmesser d, Konuswinkel a, Balligkeit bzw. Sphärenradius r, Kavität also Schnittstellenarrangement, Schmierungs- und Reibungseinflüsse im Gelenk etc. sind dabei so arrangiert, dass das Gewindespindelmodul per Schwerkraftwirkung selbsttätig in die aufrechte, bzw. lotrechte Lage gelangt bzw. in aufrechter (lotrechter) Haltung stabil gehalten wird. Demzufolge ist die Montage erleichtert, weil für eine sichere und produktive Großserienfertigung lediglich für eine lotrechte Ausrichtung von Bremssattelgehäuse sowie für eine lotrechte Zuführung von Aktuatoriken zu sorgen ist.

Die Erfindung wird nachfolgend anhand eines Ausführungsbeispiels im Zusammenhang mit der beiliegenden Zeichnung näher erläutert. In der Zeichnung zeigen:
Fig. 1 eine schematische Schnittdarstellung einer kombinierten Fahrzeugbremse umfassend eine hydraulisch betätigbare Betriebsbremse mit einer elektromechanisch betätigbaren Feststellbremsfunktion umfassend ein Gewindespindelmodul, gemäß WO 2008/037738 A1,

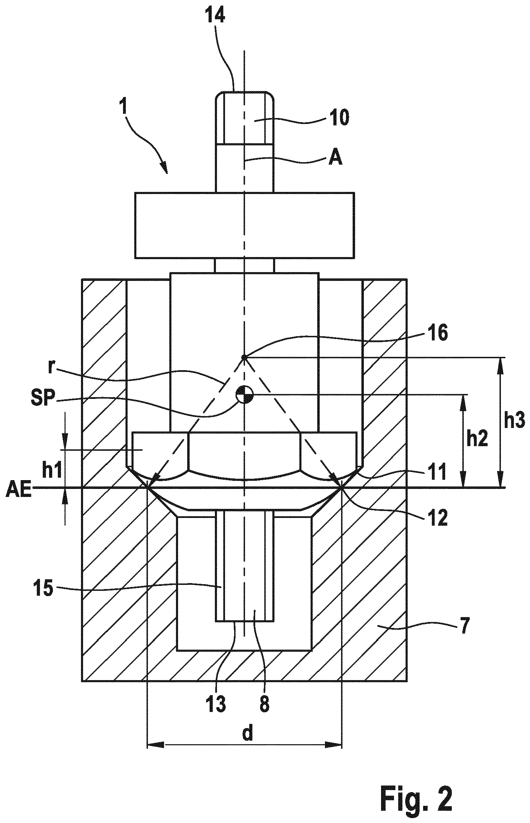

Fig. 2 schematisch ein Gewindespindelmodul,

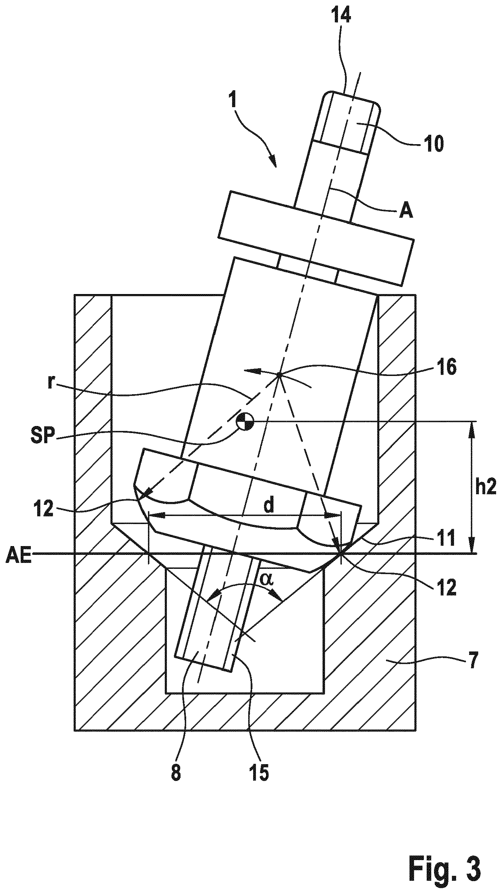

Fig. 3 schematisch ein deaxiert-querstehendes Gewindespindelmodul also in Montagefehlstellung, und

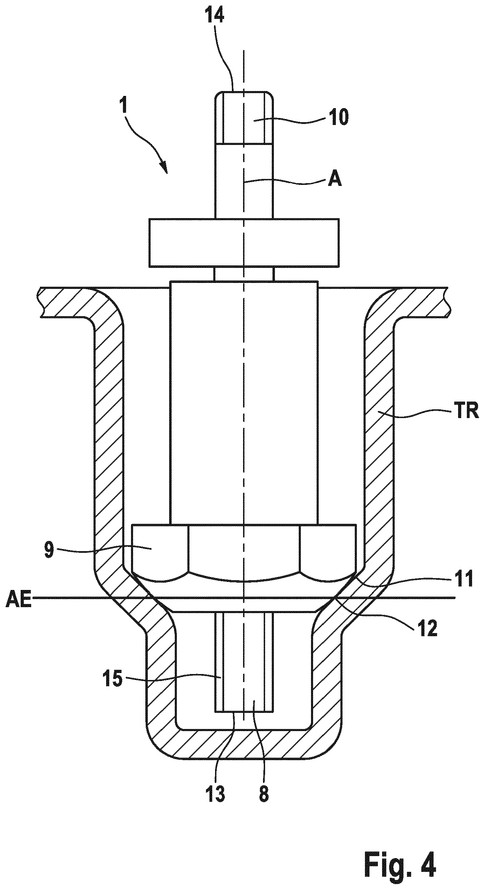

Fig. 4 ein Gewindespindelmodul in korrekter Montageposition.

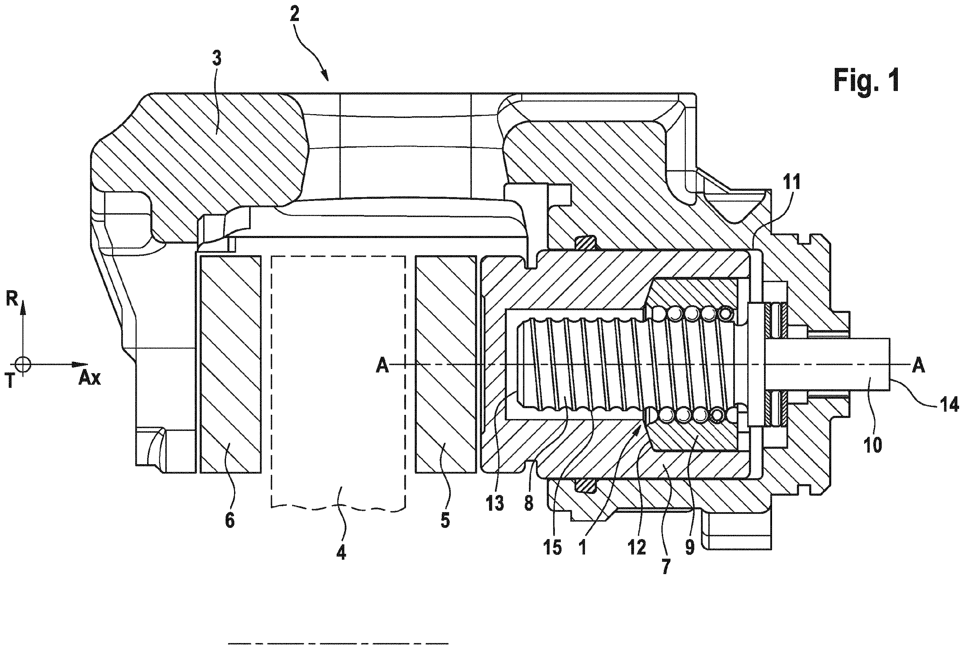

Die in Fig. 1 gezeigte kombinierte Kraftfahrzeugbremse 2 weist einerseits eine hydraulisch betätigbare Betriebsbremsfunktion und andererseits eine elektromechanisch betätigbare Feststellbremsvorrichtung/funktion auf. Die Fahrzeugbremse verfügt über ein Bremsgehäuse 3, welches den äußeren Rand einer lediglich schematisch angedeuteten Bremsscheibe 4 und zwei Bremsbeläge 5, 6 umgreift. Das Bremsgehäuse 3 bildet auf seiner Innenseite einen Bremszylinder, der einen Bremskolben 7 axial verschiebbar aufnimmt. In den zwischen Bremszylinder und Bremskolben 7 gebildeten Betriebsdruckraum kann zur Durchführung von Betriebsbremsungen Bremsflüssigkeit zugeführt werden, so dass sich ein Bremsdruck aufbaut, der den Bremskolben 7 axial entlang der Längsachse A zur Bremsscheibe 4 hin verschiebt. Dadurch wird der dem Bremskolben 7 zugewandte Bremsbelag 5 gegen die Bremsscheibe 4 gedrückt, wobei sich als Reaktion das Bremsgehäuse 3 in der entgegen gesetzten Richtung verschiebt und dadurch auch den anderen Bremsbelag 6 gegen die Bremsscheibe 4 drückt (Faustsattelbremse) .

Eine Feststellbremsvorrichtung zur Durchführung von Feststellbremsvorgängen ist elektromechanisch betätigbar und wirkt ebenfalls auf den Bremskolben 7 als Stellglied. Dazu ist ein Rot - Trans - Getriebe vorgesehen, das die Rotationsbewegung eines nicht näher gezeigten elektromechanischen Aktuators in eine Translationsbewegung umsetzt und eine Betätigung des Bremskolbens entlang der Längsachse A bewirkt. Das Getriebe wird im Wesentlichen durch das Gewindespindelmodul 1 gebildet, welches eine Gewindespindel 8 mit Außengewinde 15 und eine Gewindemutter 9 mit Innengewinde umfasst, die selbsthemmend oder ohne Selbsthemmung über Wälzkörper reibungsarm miteinander in Verbindung stehen können. Die Wälzkörper sind als Kugeln ausbildbar. Ein Zapfen 10 der Gewindespindel 8 ragt an Antriebsseite aus dem Bremsgehäuse 3 heraus und wird unter Kupplung über eine drehfest kooperierende Aktuatorschnittstelle eines nicht dargestellten Untersetzungsgetriebes von einem ebenfalls nicht gezeigten elektromechanischen Aktuator angetrieben. Die auf die Gewindespindel 8 übertragene Antriebsrotationsbewegung wird durch die drehfest in einer Aufnahme 11 im Stellkörper bzw. Bremskolben 7 aufgenommene Gewindemutter 9 in eine Translationsbewegung umgewandelt, so dass der Stellkörper/Bremskolben 7 eine Bewegung parallel zur Längsachse A vollzieht. Dadurch wird auch der Bremskolben 7 mitgenommen, an dem sich die Gewindemutter 9 mit Ihrer Auflage 12 abstützt. Gleichzeitig stützt sich die Gewindespindel 8 über einen mit der Spindel verbundenen Kragen und ein Axiallager am Bremsgehäuse 3 ab. Das Getriebe setzt also die Drehbewegung des elektromechanischen Aktuators in eine Linearbewegung um und ist für die Generierung sowohl der Zuspannkraft als auch der Lösekraft zur Durchführung eines Feststellbremsvorganges verantwortlich. Die Funktionsweise der grundsätzlich bekannten Anordnung geht grundsätzlich beispielhaft aus der internationalen Patentanmeldung WO 2008/037738 A1 hervor und muss deshalb in diesem Zusammenhang nicht nochmals erläutert werden.

Die Zeichnungen verdeutlichen zudem eine besondere Abstimmung eines erfindungsgemäßen Gewindespindelmoduls 1 in Paarung mit seiner Aufnahme 11 in einem peripheren Bauteil (Bremskolben 7, Lagertray TR etc.) Dabei ist zwischen Aufnahme 11 und Gewindespindelmodul ein Gelenk definiert. Die Position also Höhe h2 einer Schwenkgelenkachse ist im Wesentlichen durch einen Abstützdurchmesser d zwischen Gewindemutter 9 und Aufnahme 11 definiert. Dabei werden die technisch-physikalischen Zusammenhänge zwischen Gewindespindelmodul 1 und Aufnahme 11 im Lagertray TR oder Bremskolben 7 im Wesentlichen durch einen Konuswinkel α des Auflagers im Bremskolben 7, der Detailausbildung des Sphärenradius r (Abrundung/Balligkeit) von der Auflage 12 an der Stirnseite der Gewindemutter 9, der Höhe h3 des Schwerpunkts SP sowie durch die konkret eingestellten tribologischen Rauheits-, Reibungs- und Schmierungsverhältnisse im Gelenk maßgeblich mitbeeinflusst. Erfindungsgemäß verhält sich das erfindungsgemäß gestaltete Gewindespindelmodul 1 automatisch eigenstabil, bzw. wird automatisch selbsttätig durch herrschende Gravitations- bzw. Gewichtskräfte stabil lotrecht aufrecht gehalten, bzw. durch die schwerkraftbedingte Rückstelleigenschaft automatisch lotrecht derart nachjustiert. Also kehrt das Gewindespindelmodul 1 selbsttätig in eine korrekte, also stabile, Lage zurück. Mit anderen Worten ist die Höhe h3 des Schwerpunkts SP des Gewindespindelmoduls 1- in Relation zu seinem Gelenk bzw. Aufnahme 11 - zum bestmöglich korrigierenden Angriff der Schwerkraftwirkung möglichst tief abgestimmt. Das Gewindespindelmodul 1 verhält sich in seiner Aufnahme 11 gewissermaßen selbstausrichtend so wie eine Boje in einem Gewässer, oder vergleichbar einem Kinderspielzeug das als sogenanntes "Stehaufmännchen" bekannt geworden ist. Dies monostabile Formgebungsarrangement, bei gleichmäßig verteilter Dichte, ohne gesonderte Zusatzmasse, wird auch als Gömböc bezeichnet. In ergänzender Ausgestaltung der unterschiedlichen Ausführungsformen der Erfindung erscheinen zudem folgende ergänzende Abstimmungsmaßnahmen nebeneinander oder in beliebiger Kombination miteinander besonders zielführend. 1. Der Schwerpunkt SP des Gewindespindelmoduls 1 ist maximal in Richtung Abtriebsseite versetzt angeordnet. 2. Die Schwenkgelenkmitte 16 des Gewindespindelmoduls 1 ist maximal in Richtung Antriebsseite versetzt angeordent. 3. Ein Schwenkradius r des Schwenkgelenks ist maximal groß ausgebildet. 4. Eine Höhe einer Verdrehsicherungsebene h1 ist maximiert vorgesehen. Auch im Übrigen ist es aus tribologischen Gründen empfehlenswert einen Konuswinkel α zwischen etwa 90° und etwa 150° maximal groß auzulegen, und/oder auf alternativen Wegen gegenseitige Reibung weitestgehend zu minimieren. Dafür kann beispielhaft eine besondere Oberflächenglättung bzw. Rauhtiefe/Oberflächenprofilierung in der Berührung zwischen dem Auflager in der Aufnahme 11 und der Auflage 12 an der Gewindemutter 9 vorgesehen sein. Alternativ bzw. ergänzend empfiehlt sich auch die Verwendung eines Fluids beziehungsweise fluidische, oder andersartige, Schmierstoffgabe.

Ein entsprechendes sowie grundsätzlich nebengeordnetes bzw. selbständig schutzfähiges Endmontageverfahren für Kraftfahrzeugbremsen 2 definiert, dass das Bremssattelgehäuse 3 mit einer nach vertikal oben offen ausgerichteten Aufnahme 11 zur Aufnahme vom Gewindespindelmodul 1 in einem Arbeitsraum lotrecht angeordnet wird, dass danach das Gewindespindelmodul 1 in die Aufnahme 11 axial gerichtet sowie lotrecht eingeführt und derart abgesetzt wird, dass das antriebsseitige Ende 14 des Gewindespindelmoduls 1 nach vertikal oben gerichtet ist, und wobei schließlich das Aktuatormodul mit seiner Aktuatorschnittstelle nach vertikal unten lotrecht sowie fluchtend gerichtet von vertikal oben nach vertikal unten auf den Zapfen 10 abgesenkt wird, um die drehfeste bevorzugt formschlüssige Kupplung der Getriebestrangkomponenten rationell auszubilden.

### Bezugszeichenliste

- 1: Gewindespindelmodul
- 2: Kraftfahrzeugbremse
- 3: Bremsgehäuse
- 4: Bremsscheibe
- 5: Bremsbelag
- 6: Bremsbelag
- 7: Bremskolben
- 8: Gewindespindel
- 9: Gewindemutter
- 10: Zapfen
- 11: Aufnahme
- 12: Auflage
- 13: Ende (abtriebsseitig)
- 14: Ende (antriebsseitig)
- 15: Außengewinde
- 16: Schwenkgelenkmitte

- A: Längsachse
- Ax: Axialrichtung
- α: Konuswinkel
- R: Radialrichtung
- r: Sphärenradius
- SP: Schwerpunkt
- T: Tangentialrichtung
- TR: Lagertray
- h1: Verdrehsicherungsebene
- h2: Höhe des Schwerpunkts
- h3: Höhe des Gelenks
- AE: Abstützebene
- d: Abstützdurchmesser

## Patentansprüche

1. Gewindespindelmodul (1) umfassend eine längs einer Längsachse A erstreckte Gewindespindel (8), die an einem abtriebsseitigen Ende (13) über ein Außengewinde (15) sowie versetzt zum Außengewinde (15) über ein antriebsseitiges Ende (14) mit einem Zapfen (10) zur drehfesten Kupplung mit einer Aktuatorschnittstelle verfügt, sowie mit einer Gewindemutter (9), die auf das Außengewinde (15) aufgeschraubt ist, und wobei eine gelenkartig mit Sphärenradius r gekrümmte Auflage (12) der Gewindemutter (9) als Schwenkgelenk des Gewindespindelmoduls (1) mit einer Schwenkgelenkmitte (16) in Bezug auf eine zugeordnete Aufnahme (11) einschließlich Auflageebene AE, wie beispielsweise einem Transportdisplay, Lagertray TR oder Bremskolben (7) dient, und wobei das Gewindespindelmodul (1) über einen Masseschwerpunkt SP verfügt, **dadurch gekennzeichnet, dass** das Gewindespindelmodul (1) als konvexer dreidimensionaler Körper mit homogener, gleichmäßiger Dichteverteilung derart gestaltet vorgesehen ist, dass das Gewindespindelmodul (1) mit Schwerkraftantrieb, beziehungsweise als regelungstechnische Antwort auf eine Störgröße, respektive einen Eingriff beziehungsweise Auslenkung, jeweils automatisch-selbsttätig eine monostabile Gleichgewichtslage aufweist, und wobei die monostabile Gleichgewichtslage weiterhin **dadurch gekennzeichnet ist, dass** das antriebsseitige Ende (14) des Gewindespindelmoduls (1) vertikal oben und das abtriebsseitige Ende (13) des Gewindespindelmoduls (1) vertikal unten fluchtend zur Längsachse A lotrecht übereinander platziert sowie orthogonal zur horizontal arrangierten Auflageebene AE gerichtet vorgesehen sind, unddass der Schwerpunkt SP des Gewindespindelmoduls (1) abtriebsseitig versetzt angeordnet ist, indem eine Distanz zwischen Schwerpunkt SP und Auflage (12) etwa gleich oder kürzer ausgebildet ist, als ein Abstand zwischen Schwenkgelenkmitte (16) und Auflage (12), so dass sich das Gewindespindelmodul (1) eigenstabil, automatisch sowie selbsttätig in Relation zu seiner Aufnahme (11) zentriert, und mit der zugeordneten Aktuatorschnittstelle fluchtet.

2. Gewindespindelmodul (1) nach Anspruch 1, **dadurch gekennzeichnet, dass** der Schwerpunkt SP des Gewindespindelmoduls (1) maximal in Richtung Abtriebsseite versetzt ist.

3. Gewindespindelmodul (1) nach einem oder mehreren der Ansprüche 1-2, **dadurch gekennzeichnet, dass** die Schwenkgelenkmitte (16) maximal in Richtung Antriebsseite versetzt ist.

4. Gewindespindelmodul (1) nach einem oder mehreren der Ansprüche 1-3, **dadurch gekennzeichnet, dass** ein Schwenkradius R des Schwenkgelenks maximiert ist.

5. Gewindespindelmodul (1) nach einem oder mehreren der vorhergehenden Ansprüche 1-4, **dadurch gekennzeichnet, dass** eine Höhe einer Verdrehsicherungsebene h1 maximiert ist.

6. Gewindespindelmodul (1) nach einem oder mehreren der vorhergehenden Ansprüche 1-5, **dadurch gekennzeichnet, dass** ein definiertes konstruktives Größenverhältnis von d/h3 zwischen etwa 0,7 bis etwa 2,2 vorgesehen ist.

7. Gewindespindelmodul (1) nach einem oder mehreren der vorhergehenden Ansprüche, **dadurch gekennzeichnet, dass** dem Schwenkgelenk ein Schmiermittel zugeordnet ist.

8. Gewindespindelmodul (1) nach einem oder mehreren der vorhergehenden Ansprüche, **dadurch gekennzeichnet, dass** ein Konuswinkel α mehr als 90° beträgt, dass der Konuswinkel α prinzipiell maximiert ist, und wobei der Konuswinkel α einen vorbestimmten Maximalwert von im Wesentlichen etwa 150° nicht überschreitet.

9. Verfahren zur Endmontage einer Kraftfahrzeugbremse (2) aus mehreren Komponenten umfassend ein Bremsgehäuse (3), ein Aktuatormodul und ein Gewindespindelmodul (1) mit den Merkmalen nach einem oder mehreren der vorhergehenden Ansprüche, **dadurch gekennzeichnet, dass** das Bremsgehäuse (3) mit einer nach vertikal oben offenen Aufnahme (11) zur Aufnahme vom Gewindespindelmodul (1) in einem Arbeitsraum lotrecht angeordnet wird, dass danach das Gewindespindelmodul (1) in die Aufnahme (11) axial gerichtet sowie lotrecht eingeführt und derart abgesetzt wird, dass das antriebsseitige Ende (14) des Gewindespindelmoduls (1) nach vertikal oben gerichtet ist, und wobei schließlich das Aktuatormodul mit der Aktuatorschnittstelle nach vertikal unten lotrecht sowie fluchtend gerichtet von vertikal oben nach vertikal unten abgesenkt wird, um diese mit dem Gewindespindelmodul (1) drehfest zu verbinden.

## Claims

1. Threaded spindle module (1) comprising a threaded spindle (8) which extends along a longitudinal axis A and has an external thread (15) at an output-side end (13), and, offset with respect to the external thread (15), a drive-side end (14) with a peg (10) for rotationally fixed coupling to an actuator interface, and with a threaded nut (9) which is screwed onto the external thread (15), and wherein a joint-like curved support point (12), with sphere radius r, of the threaded nut (9) serves as a pivot joint of the threaded spindle module (1) with a pivot joint center (16) relative to an associated receiver (11), including a support plane AE, such as for example a transport display, storage tray TR or brake piston (7), and wherein the threaded spindle module (1) has a center of gravity SP, **characterized in that** the threaded spindle module (1) is designed as a convex three-dimensional body with a homogeneous, uniform density distribution, such that the threaded spindle module (1) automatically and autonomously assumes a monostable equilibrium position under force of gravity or as a controlled response to a disturbance variable or intervention or deflection, and wherein the monostable equilibrium position is furthermore **characterized in that** the drive-side end (14) of the threaded spindle module (1) is placed vertically at the top and the output-side end (13) of the threaded spindle module (1) is placed vertically at the bottom, perpendicularly one above the other and aligned with the longitudinal axis A, and oriented orthogonally to the horizontally arranged support plane AE, **and in that** the center of gravity SP of the threaded spindle module (1) is arranged offset on the output side, **in that** a distance between the center of gravity SP and the support point (12) is designed to be approximately the same as or shorter than a distance between the pivot joint center (16) and the support point (12), so that the threaded spindle module (1) centers itself in an inherently stable, automatic and autonomous fashion relative to its receiver (11), and aligns with the assigned actuator interface.

2. Threaded spindle module (1) according to Claim 1, **characterized in that** the center of gravity SP of the threaded spindle module (1) is offset to a maximum in the direction of the output side.

3. Threaded spindle module (1) according to one or more of Claims 1 - 2, **characterized in that** the pivot joint center (16) is offset to a maximum in the direction of the drive side.

4. Threaded spindle module (1) according to one or more of Claims 1 - 3, **characterized in that** a pivot radius R of the pivot joint is maximized.

5. Threaded spindle module (1) according to one or more of the preceding claims 1-4, **characterized in that** a height of a twist prevention plane h1 is maximized.

6. Threaded spindle module (1) according to one or more of the preceding claims 1-5, **characterized in that** a defined structural size ratio of d/h3 of between around 0.7 to around 2.2 is provided.

7. Threaded spindle module (1) according to one or more of the preceding claims, **characterized in that** a lubricant is assigned to the pivot joint.

8. Threaded spindle module (1) according to one or more of the preceding claims, **characterized in that** a cone angle α amounts to more than 90°, **in that** the cone angle α is in principle maximized, and wherein the cone angle α does not exceed a predefined maximum value of substantially around 150°.

9. Method for final mounting of a motor vehicle brake (2) comprising several components, comprising a brake housing (3), an actuator module and a threaded spindle module (1) with the features according to one or more of the preceding claims, **characterized in that** the brake housing (3) is arranged vertically in a working chamber with a receiver (11) which is open vertically at the top for receiving the threaded spindle module (1), **in that** then the threaded spindle module (1) is inserted into the receiver (11) vertically with axial orientation and is lowered such that the drive-side end (14) of the threaded spindle module (1) points vertically upward, and wherein finally the actuator module with the actuator interface pointing vertically downward, perpendicularly and aligned, is lowered from vertically upward to vertically downward so as to rotationally fixedly connect the latter to the threaded spindle module (1).

## Revendications

1. Module de broche filetée (1) comprenant une broche filetée (8) s'étendant le long d'un axe longitudinal A, qui dispose à une extrémité côté sortie (13) d'un filetage extérieur (15) ainsi que, décalée par rapport au filetage extérieur (15), d'une extrémité côté entraînement (14) munie d'un tenon (10) pour l'accouplement immobile en rotation à une interface d'actionneur, ainsi que munie d'un écrou fileté (9), qui est vissé sur le filetage extérieur (15), et dans lequel un appui (12) de l'écrou fileté (9), courbé à la manière d'une articulation avec un rayon sphérique r, sert d'articulation pivotante du module de broche filetée (1) avec un centre d'articulation pivotante (16) par rapport à un logement associé (11), y compris un plan d'appui AE, tel que par exemple un affichage de transport, un plateau de stockage TR ou un piston de frein (7), et dans lequel le module de broche filetée (1) dispose d'un centre de gravité SP, **caractérisé en ce que** le module de broche filetée (1) est prévu sous la forme d'un corps tridimensionnel convexe avec une répartition de densité homogène et uniforme, de telle sorte que le module de broche filetée (1) avec entraînement par gravité, ou en tant que réponse de régulation à une grandeur perturbatrice, respectivement à une intervention ou à une déviation, présente de manière automatique et autonome une position d'équilibre monostable, et dans lequel la position d'équilibre monostable est en outre caractérisée en que l'extrémité côté entraînement (14) du module de broche filetée (1) est placée verticalement en haut et l'extrémité côté sortie (13) du module de broche filetée (1) est placée verticalement en bas, alignée verticalement l'une sur l'autre par rapport à l'axe longitudinal A et orientées orthogonalement par rapport au plan d'appui AE disposé horizontalement, et **en ce que** le centre de gravité SP du module de broche filetée (1) est agencé en décalage côté sortie, par le fait qu'une distance entre le centre de gravité SP et l'appui (12) est configurée approximativement égale ou plus courte qu'une distance entre le centre de l'articulation pivotante (16) et l'appui (12), de telle sorte que le module de broche filetée (1) se centre de manière stable, de manière automatique et autonome par rapport à son logement (11), et s'aligne avec l'interface d'actionneur associée.

2. Module de broche filetée (1) selon la revendication 1, **caractérisé en ce que** le centre de gravité SP du module de broche filetée (1) est décalé au maximum en direction du côté de la sortie.

3. Module de broche filetée (1) selon une ou plusieurs des revendications 1 à 2, **caractérisé en ce que** le centre de l'articulation pivotante (16) est décalé au maximum en direction du côté de l'entraînement.

4. Module de broche filetée (1) selon une ou plusieurs des revendications 1 à 3, **caractérisé en ce qu'**un rayon de pivotement R de l'articulation pivotante est maximisé.

5. Module de broche filetée (1) selon une ou plusieurs des revendications 1 à 4 précédentes, **caractérisé en ce qu'une** hauteur d'un plan de blocage en rotation h1 est maximisée.

6. Module de broche filetée (1) selon une ou plusieurs des revendications 1 à 5 précédentes, **caractérisé en ce qu'**un rapport de taille de construction défini de d/h3 compris entre environ 0,7 et environ 2,2 est prévu.

7. Module de broche filetée (1) selon une ou plusieurs des revendications précédentes, **caractérisé en ce qu'**un lubrifiant est associé à l'articulation pivotante.

8. Module de broche filetée (1) selon une ou plusieurs des revendications précédentes, **caractérisé en ce qu'**un angle de cône α est supérieur à 90°, **en ce que** l'angle de cône α est en principe maximisé, et dans lequel l'angle de cône α ne dépasse pas une valeur maximale prédéterminée d'essentiellement environ 150°.

9. Procédé de montage final d'un frein de véhicule automobile (2) à partir de plusieurs composants comprenant un boîtier de frein (3), un module d'actionneur et un module de broche filetée (1) ayant les caractéristiques selon une ou plusieurs des revendications précédentes, **caractérisé en ce que** le boîtier de frein (3) est agencé verticalement dans un espace de travail avec un logement (11) ouvert verticalement vers le haut pour recevoir le module de broche filetée (1), **en ce qu'**ensuite, le module de broche filetée (1) est introduit dans le logement (11) en étant orienté axialement ainsi que verticalement et est déposé de telle sorte que l'extrémité côté entraînement (14) du module de broche filetée (1) est orientée verticalement vers le haut, et dans lequel finalement le module d'actionneur est abaissé avec l'interface d'actionneur verticalement vers le bas ainsi qu'en étant orienté en alignement de la verticale vers le haut à la verticale vers le bas, afin de relier celle-ci au module de broche filetée (1) de manière immobile en rotation.
